# EUROPÄISCHE PATENTANMELDUNG

(11) **EP 4 741 597 A1**
(43) Veröffentlichungstag der Anmeldung: **13.05.2026**
(21) Anmeldenummer: 24211553.3
(22) Anmeldetag: 07.11.2024
(51) Int. Cl.: E04C 2/34, B32B 3/00

(54) **VERFAHREN ZUM HERSTELLEN EINES PLATTENFÖRMIGEN BAUMATERIALS MIT FEUCHTIGKEITSABSORBIERENDEN EIGENSCHAFTEN**

(71) Anmelder: MAGU Swiss AG, 8200 Schaffhausen (CH)
(72) Erfinder: Günthner, Stefan, 78183 Hüfingen (DE)
(74) Vertreter: Keilitz & Partner Patentanwälte PartGmbB

(57) **Zusammenfassung**

Die Erfindung betrifft ein Verfahren zur Beschichtung von Noppenstrukturen und Noppenplatten, insbesondere Wärmedämmplatten, die im Baubereich eingesetzt werden. Das Verfahren sieht vor, dass die Komponenten der Beschichtung in separaten Schritten und in einer Fertigungsstraße aufgebracht werden. Dies ermöglicht eine gleichmäßige Beschichtung aller Oberflächen.

## Beschreibung

Die Erfindung betrifft ein Verfahren zum Herstellen eines plattenförmigen Baumaterials mit feuchtigkeitsabsorbierenden Eigenschaften, das zum Beispiel zur Sanierung oder Trocknung von Flachdächern oder anderen Bauwerkselementen eingesetzt werden kann.

### Stand der Technik:

Auf dem Gebiet des Bauwesens ist es bekannt, Noppenplatten zur Trocknung und Dämmung von Flachdächern einzusetzen, die mit einem feuchtigkeitsabsorbierenden Material beschichtet sind.

In der europäischen Patentanmeldung EP 1223261 wird beschrieben, wie beschichtete Noppenplatten zur Sanierung von durchfeuchteten Flachdächern verwendet werden. Die hydrophile, meist zementhaltige Beschichtung der Noppenplatte sorgt dabei für die zeitnahe Austrocknung der darunter liegenden Schichten und ermöglicht die Erhaltung des alten Dachaufbaus. Bauphysikalisch ähnliche Anwendungsbereiche wie das Austrocknen von horizontalen Flächen wie durchfeuchtete Estriche, Betonbauteile oder Decken und / oder auch vertikal verlaufende Bauteile wie u.a. Wände kann entsprechend erfolgen.

Im Stand der Technik wird die hydrophile Beschichtung in der Regel auf die Noppenplatten aufgespritzt oder die Noppenplatten werden in ein Beschichtungsbad eingetaucht. Die genannten Beschichtungsverfahren haben aber verschiedentliche Nachteile. So müssen zum einen größere Mengen des Beschichtungsmaterials vorgemischt und vorgehalten werden, was Ablagerungen zur Folge hat. Darüber hinaus bereitet das Aushärten des angemischten Beschichtungsmaterials Probleme und erschwert die Handhabung und Reinigung der Vorrichtungen. Zudem wird der Materialbedarf erhöht. Zudem ist ein homogenes Beschichten aller notwendigen, vertikalen und / oder horizontalen Flächen und insbesondere der Flanken der Noppenplatte wegen der meist hohen Viskosität der angerührten Beschichtungsmasse meist nicht möglich. Unterschiedliche und oft zu große Auftragsstärken sind die Folge.

### Aufgabe der Erfindung:

Es ist daher die Aufgabe der vorliegenden Erfindung, ein verbessertes Verfahren zur Beschichtung von Noppenplatten bereitzustellen, mittels dessen die feuchtigkeitsabsorbierende Beschichtung zum einen gleichmäßig auf allen Flächen, einschließlich der vertikalen oder eventuell auch konischen Flanken der Noppen aufgetragen wird und die Nachteile des Anmischens des Beschichtungsmaterial mit den unerwünschten Effekten von Ablagerung, erhöhtem Reinigungs- und Wartungsaufwand, höherem Materialbedarf des Beschichtungsmaterials nicht auftreten.

Gelöst wird diese Aufgabe gemäß der Erfindung durch die in den unabhängigen Patentansprüchen 1 und 2 angegebenen Merkmale. Weitere Ausgestaltungen der Erfindung ergeben sich aus den Unteransprüchen.

### Lösung der Aufgabe:

Die Erfindung stellt ein Verfahren bereit, bei dem die feuchtigkeitsabsorbierende Schicht in einem vorzugsweise mehrstufigen Prozess auf eine Noppenstruktur aufgetragen wird. Dabei können die verschiedenen Komponenten, wie Haftmittel und Beschichtungsmaterial räumlich an einem Ort oder in aufeinanderfolgenden Schritten - vergleichbar einer Fertigungsstraße - aufgebracht werden. Dies ermöglicht eine flexible und effiziente Handhabung des Beschichtungsverfahrens.

Gemäß der Erfindung wird ein erstes Verfahren zum Herstellen eines plattenförmigen Baumaterials mit feuchtigkeitsabsorbierenden Eigenschaften vorgeschlagen, das wenigstens folgende Schritte umfasst:
- Bereitstellen einer plattenförmigen Noppenstruktur;
- Aufbringen eines Haftmittels auf die Noppenstruktur und
- Aufbringen eines feuchtigkeitsabsorbierenden Beschichtungsmaterials in Pulverform.

Das Aufbringen von Haftmittel und Beschichtungsmaterial kann in aufeinanderfolgenden Prozessschritten durchgeführt werden. Beide Materialien können aber auch gleichzeitig aufgebracht werden, indem beispielsweise ein pulverförmiges Beschichtungsmaterial auf die Noppenstruktur befördert wird, wobei es noch in der Luft (bevor es auf der Oberfläche der Noppenstruktur angelangt ist) mit einem Haftmittel versetzt wird. Das pulverförmige Beschichtungsmaterial kann z. B. unter dem Einfluss der Schwerkraft auf die Noppenstruktur herunter rieseln und, während es sich noch in der Luft befindet, mit einem Haftmittel besprüht werden. Das angefeuchtete Beschichtungsmaterial fällt dann auf die Noppenstruktur und bleibt dort haften. Der Beschichtungsprozess kann z. B. in einer Wirbelkammer stattfinden.

Das pulverförmige Beschichtungsmaterial kann gemäß der Erfindung grundsätzlich trocken oder leicht angefeuchtet sein.

Außerdem wird ein alternatives zweites Verfahren zum Herstellen eines plattenförmigen Baumaterials mit feuchtigkeitsabsorbierenden Eigenschaften vorgeschlagen, das wenigstens folgende Schritte umfasst:
- Bereitstellen einer plattenförmigen Noppenstruktur;
- Aufbringen eines feuchtigkeitsabsorbierenden Beschichtungsmaterials in Pulverform auf die Noppenstruktur, ohne diese zuvor mit einem Haftmittel versehen zu haben und
- Aufbringen eines Bindemittels auf die Noppenstruktur zum Binden des zuvor aufgebrachten Beschichtungsmaterials.

Gemäßer einer speziellen Ausführungsform der Erfindung wird die Noppenstruktur vor dem Aufbringen des feuchtigkeitsabsorbierenden Beschichtungsmaterials mit einem Haftmittel und nach dem Aufbringen des Beschichtungsmaterials mit einem Bindemittel versehen. Ein solches Verfahren umfasst dann wenigstens die folgenden Schritte:
- Bereitstellen einer plattenförmigen Noppenstruktur;
- Aufbringen eines Haftmittels auf die Noppenstruktur;
- Aufbringen eines feuchtigkeitsabsorbierenden Beschichtungsmaterials in Pulverform auf die Noppenstruktur und
- Aufbringen eines Bindemittels auf die Noppenstruktur zum Binden des Beschichtungsmaterials.

Die vorgenannten Schritte 2 (Aufbringen von Haftmittel) und 3 (Aufbringen des Beschichtungsmaterials) und/oder die Schritte 3 (Aufbringen des Beschichtungsmaterials) und 4 (Aufbringen des Bindemittels) können wahlweise in aufeinanderfolgenden Schritten oder gleichzeitig ausgeführt werden.

Das genannte Haftmittel ist insbesondere eine adhäsive Substanz, die die Haftung und Verbindung des Beschichtungsmaterials auf der meist hydrophoben Oberfläche der Noppenstruktur sicherstellt. Die adhäsive Substanz kann z. B.

Wasser oder eine wässrige Lösung oder einer polymermodifizierten Emulsion sein.

Das Haftmittel kann z. B. mittels Düsen auf die Noppenstruktur aufgespritzt werden. Die Noppenstruktur kann aber auch in ein Haftmittelbad getaucht werden, um alle vertikalen und horizontalen Flächen der Noppenplatte gleichmäßig zu benetzen. So wird gewährleistet, dass alle relevanten Flächen nass bzw. mit Emulsion benetzt und entsprechend für die nachfolgende Beschichtung vorbereitet sind.

Die Noppenstruktur kann z. B. aus Schaumstoff, insbesondere Styropor bestehen oder einer Trennlage sein.

Unter der Bezeichnung "plattenförmige Noppenstruktur" wird gemäß der Erfindung jedes plattenförmige oder schichtartige Material verstanden, das nach außen vorspringende Bereiche - die "Noppen" - aufweist, die der Struktur eine vergrößerte Oberfläche verleihen. Gemäß einer speziellen Ausführungsform der Erfindung ist die Noppenstruktur eine Noppenplatte oder eine plattenförmige Gitterstruktur mit Noppen oder eine Noppenbahn, die z. B. zu einer Rolle aufgewickelt sein kann. Im Falle einer Gitterstruktur kann diese z. B. zuerst beschichtet und dann in einem nachfolgenden Schritt an einer Platte befestigt werden. Die Verwendung eines Noppengitters hat den Vorteil, dass die Beschichtung ohne Behinderung durch zusätzliche Bauteile möglich ist, was zu einem gleichmäßigen und effizienten Auftrag des Beschichtungsmaterials führt.

In einer ersten Ausführungsform der Erfindung umfasst das Beschichtungsmaterial Zement und Sand. In einer zweiten Ausführungsform der Erfindung ist das Beschichtungsmaterial zementfrei und kann z. B. Gips umfassen.

Das Aufbringen des Beschichtungsmaterials auf die Noppenstruktur findet vorzugsweise in einer abgeschlossenen Kammer statt, um eine kontrollierte Umgebung zu schaffen und Verschmutzung zu vermeiden. Das vorzugsweise in Pulverform bereitgestellte Material kann z. B. über ein engmaschiges Netz oder auch ein Schlitzblech durch eine mechanische Schiebervorrichtung gleichmäßig in die geschlossene Kammer gestreut werden. Die Anordnung und Größe der Maschen oder auch Schlitze ist hierbei so gewählt, dass das Beschichtungsmaterial durch die Bewegung der Schiebervorrichtung gleichmäßig in die darunterliegende Kammer rieselt, jedoch ohne Bewegung der Vorrichtung auf dem Sieb, Netz oder Blech liegen bleibt. Durch Einsatz von Luftdüsen kann das Material so verwirbelt werden, dass es sich gleichmäßig auf allen Bereichen der Noppenstruktur, einschließlich der schwer zugänglichen Noppenflanken, festsetzt. Die Luftdüsen, die zu einer ausreichenden Verwirbelung des Materials führen, können dabei alternierend von verschiedenen Seiten angesteuert werden. Der Abstand zwischen der Zerstäubungseinrichtung und der Noppenplatte - also die Höhe der Wirbelkammer wird so gewählt, dass das pulverförmige Material gleichmäßig zerstäubt wird.

Gemäß der Erfindung kann das Beschichtungsmaterial also z. B. in einer Wirbelkammer und / oder mittels Luftdüsen auf die Noppenstruktur aufgebracht werden.

Das eingangs genannte Bindemittel kann z. B Wasser, eine Emulsion oder eine polymermodifizierten Bindedispersion sein. Das Bindemittel wird vorzugsweise mittels Düsen auf die teilweise noch trockene Pulveroberfläche aufgebracht. Der aufgesprühte Film dient dem Abbinden des trocken oder auch feucht aufgetragenen Beschichtungsmaterials. Dieser Verfahrensschritt kann bei Bedarf mehrfach wiederholt werden, um eine gleichmäßige Schicht in der erforderlichen Dicke und Saugfähigkeit zu gewährleisten.

Gemäß der Erfindung kann die Noppenstruktur auch mit den Noppen nach unten angeordnet sein und von unten beschichtet werden. So kann zum Beispiel zunächst ein Haftmittel auf die Unterseite aufgesprüht und danach ein pulverförmiges Beschichtungsmaterial mittels Düsen aufgebracht werden. Gemäß einer Ausführungsform der Erfindung können auch beide Seiten der Noppenstruktur beschichtet werden. Die Noppenstruktur kann auch auf beiden Seiten Noppen aufweisen.

Diese innovative Vorgehensweise des Auftragens der feuchtigkeitsabsorbierenden Beschichtung bietet eine flexible Anpassung des Beschichtungsverfahrens an verschiedene Gegebenheiten sowie einen homogenen, gleichmäßigen Auftrag des Beschichtungsmaterials. Das erfindungsgemäße Verfahren hat auch den Vorteil, dass lediglich so viel Wasser zum Einsatz kommt, wie das meist auf Zement basierende Beschichtungsmaterial zum Abbinden benötigt. Somit minimiert diese Art der Beschichtung auch die anschließende Trocknung der Beschichtung ganz wesentlich.

### Vorteile der Erfindung:

- Das Voranmischen von zementgebundenen Beschichtungsmassen entfällt, was den Materialverbrauch optimiert und die Reinigung erleichtert.
- Die wasserabsorbierende Schicht wird gleichmäßig auf allen Flächen der Noppenplatte aufgetragen, einschließlich der schwer zugänglichen vertikalen und konischen Flanken.
- Das Verfahren bietet Flexibilität bei der Reihenfolge und dem Ort der Beschichtungsprozesse, was eine effiziente Fertigung in einer Produktionslinie ermöglicht.
- Die Abbindezeit des aufgebrachten Beschichtungsmaterials wird durch den sparsamen Einsatz von Wasser und /oder einer Haftemulsion deutlich verringert.

### Kurze Beschreibung der Zeichnungen

Die Erfindung wird nachstehend anhand der beigefügten Zeichnungen beispielhaft näher erläutert. Es zeigen:
Fig. 1 eine Ansicht eines ersten Verfahrensschritts, bei dem eine Noppenstruktur mit einem Haftmittel besprüht wird;
Fig. 2 eine perspektivische Ansicht einer Wirbelkammer zum Aufbringen eine pulverförmigen Beschichtungsmaterials auf eine Noppenstruktur; und
Fig. 3 eine Ansicht eines dritten Verfahrensschritts, bei dem eine Noppenstruktur mit einem Bindemittel besprüht wird;

### Ausführungsformen der Erfindung

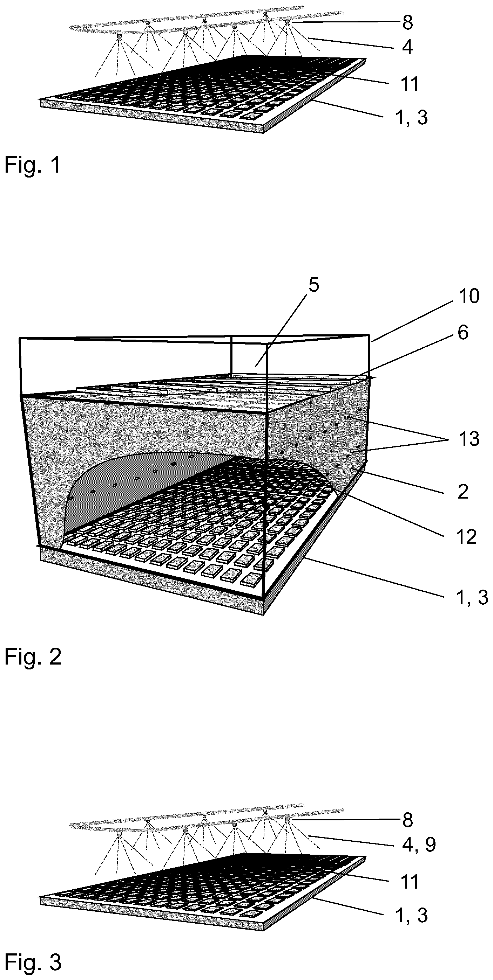

Fig. 1 zeigt einen ersten Verfahrensschritt eines Verfahrens zum Herstellen einer plattenförmigen Noppenstruktur 1 mit feuchtigkeitsabsorbierenden Eigenschaften. Dabei wird eine Noppenstruktur 1 mittels Düsen 8 mit einem Haftmittel 4, wie z. B. Wasser oder einer wässrigen Lösung, besprüht. Das Haftmittel 4 dient dazu, die Haftung eines später aufgetragenen Beschichtungsmaterials 5 auf der meist hydrophoben Oberfläche der Noppenstruktur 1 sicherzustellen. Das Beschichtungsmaterial 5 verleiht der Noppenstruktur 1 ihre feuchtigkeitsabsorbierende Eigenschaft. Es kann z. B. eine pulverförmige Mischung aus Zement und Sand sein, kann aber auch zementfrei sein.

Die Noppenstruktur 1 ist in diesem Ausführungsbeispiel eine Noppenplatte 3 aus EPS, die auf ihrer Oberfläche eine Vielzahl von Noppen 11 aufweist. Die Noppen 11 zeigen nach oben und die Düsen 8 befinden sich oberhalb der Noppenplatte 3.

Fig. 2 zeigt eine perspektivische Ansicht einer Wirbelkammer 2 zum Aufbringen eines pulverförmigen Beschichtungsmaterials 5 auf die zuvor befeuchtete Noppenplatte 3. Die Wirbelkammer 2 umfasst einen oben angeordneten Aufgabebehälter 10, der mit dem pulverförmigen Beschichtungsmaterial 5 befüllt ist. Das pulverförmige Beschichtungsmaterial 5 wird mithilfe einer mechanischen Schiebervorrichtung 6 über ein engmaschiges Netz oder auch ein Schlitzblech gleichmäßig in eine geschlossene Kammer 12 gestreut. Die Anordnung und Größe der Maschen oder auch Schlitze ist hierbei so gewählt, dass das Beschichtungsmaterial 5 durch die Bewegung der Schiebervorrichtung 6 gleichmäßig in die darunterliegende Kammer 12 rieselt, jedoch ohne Bewegung der Vorrichtung auf dem Sieb, Netz oder Blech liegen bleibt. Die Noppenplatte 3 liegt auf dem Boden der Wirbelkammer 2. Die Wirbelkammer 2 umfasst ferner Luftdüsen 13, mit denen das Beschichtungsmaterial 5 so verwirbelt werden, dass es sich gleichmäßig auf allen Bereichen der Noppenplatte 3, einschließlich der schwer zugänglichen Noppenflanken, festsetzt. Die Luftdüsen 13 können dabei alternierend von verschiedenen Seiten angesteuert werden. Der Abstand zwischen der Schiebervorrichtung 6 und der Noppenplatte 3 - also die Höhe der Wirbelkammer 2 ist so gewählt, dass das pulverförmige Material 5 gleichmäßig zerstäubt wird.

Nach dem Aufbringen des Beschichtungsmaterials 5 auf die Noppenplatte 3 wird das Beschichtungsmaterial 5 noch mit einem Bindemittel 9 besprüht, das dem Abbinden des trocken oder auch feucht aufgetragenen Beschichtungsmaterials 5 dient. Figur 3 zeigt das Besprühen der Noppenplatte 3 mittels Düsen 8. Dieser Verfahrensschritt kann bei Bedarf mehrfach wiederholt werden, um eine gleichmäßige Schicht an Beschichtungsmaterial 5 in der erforderlichen Dicke und Saugfähigkeit zu gewährleisten. Bei dem Bindemittel 9 kann es sich wiederum um Wasser, eine wässrige Lösung oder um eine Dispersion handeln.

## Patentansprüche

1. Verfahren zum Herstellen eines plattenförmigen Baumaterials mit feuchtigkeitsabsorbierenden Eigenschaften, umfassend wenigstens folgende Schritte:
- Aufbringen eines Haftmittels (4) auf eine Noppenstruktur (1) und
- Aufbringen eines feuchtigkeitsabsorbierenden Beschichtungsmaterials (5) in Pulverform auf die mit dem Haftmittel (4) versehene Noppenstruktur (1).

2. Verfahren zum Herstellen eines plattenförmigen Baumaterials mit feuchtigkeitsabsorbierenden Eigenschaften, umfassend wenigstens folgende Schritte:
- Aufbringen eines feuchtigkeitsabsorbierenden Beschichtungsmaterials (5) in Pulverform auf eine Noppenstruktur (1), ohne diese zuvor mit einem Haftmittel (4) versehen zu haben und
- Aufbringen eines Bindemittels (9) auf die Noppenstruktur (1) zum Binden des zuvor aufgebrachten Beschichtungsmaterials (5).

3. Verfahren zum Herstellen eines plattenförmigen Baumaterials mit feuchtigkeitsabsorbierenden Eigenschaften gemäß Anspruch 1, **dadurch gekennzeichnet, dass** das Verfahren, wenigstens folgende Schritte umfasst:
- Aufbringen eines Haftmittels (4) auf eine Noppenstruktur (1);
- Aufbringen eines feuchtigkeitsabsorbierenden Beschichtungsmaterials (5) in Pulverform auf die Noppenstruktur (1) und
- Aufbringen eines Bindemittels auf die Noppenstruktur (1) zum Binden des zuvor aufgebrachten Beschichtungsmaterials (5).

4. Verfahren nach einem der vorhergehenden Ansprüche, **dadurch gekennzeichnet, dass** die Noppenstruktur (1) eine Noppenplatte (3) oder eine Gitterstruktur mit Noppen (11) ist.

5. Verfahren nach einem der vorhergehenden Ansprüche, **dadurch gekennzeichnet, dass** das Haftmittel (4) eine Emulsion, eine Dispersion oder Wasser ist.

6. Verfahren nach einem der vorhergehenden Ansprüche, **dadurch gekennzeichnet, dass** das Beschichtungsmaterial (5) Zement und Sand umfasst.

7. Verfahren nach einem der vorhergehenden Ansprüche 1 -5, **dadurch gekennzeichnet, dass** das Beschichtungsmaterial (5) zementfrei ist.

8. Verfahren nach einem der vorhergehenden Ansprüche, **dadurch gekennzeichnet, dass** das Beschichtungsmaterial (5) in einer Wirbelkammer (2) und / oder mittels Luftdüsen (8) auf die Noppenstruktur (1) aufgebracht wird.

9. Verfahren nach Anspruch 4, **dadurch gekennzeichnet, dass** die gitterartige Noppenstruktur (1) nachträglich durch Verkleben oder mechanisches Befestigen an einer Tragstruktur, zum Beispiel einer Platte, angebracht wird.

10. Verfahren nach einem der vorhergehenden Ansprüche, bei dem das Beschichtungsmaterial (5) von unten auf die Noppenstruktur (1) aufgebracht wird.

11. Verfahren nach Anspruch 1, **dadurch gekennzeichnet, dass** das Bindemittel (9) eine Emulsion, eine Dispersion oder Wasser ist.
